# EUROPÄISCHE PATENTSCHRIFT

(11) **EP 4 352 403 B1**
(45) Veröffentlichungstag und Bekanntmachung des Hinweises auf die Patenterteilung: **29.01.2025**
(21) Anmeldenummer: 22729586.2
(22) Anmeldetag: 18.05.2022
(51) Int. Cl.: F17C 13/04

(54) **BRENNSTOFFZELLENSYSTEM, GASTANKVORRICHTUNG UND ABSPERRVENTIL FÜR EINE GASTANKVORRICHTUNG**
FUEL CELL SYSTEM, GAS TANK DEVICE AND SHUT-OFF VALVE FOR A GAS TANK DEVICE
SYSTÈME DE PILE À COMBUSTIBLE, DISPOSITIF DE RÉSERVOIR DE GAZ ET SOUPAPE D'ARRÊT POUR UN DISPOSITIF DE RÉSERVOIR DE GAZ

(30) Priorität: 09.06.2021 DE 102021205810
(43) Veröffentlichungstag der Anmeldung: 17.04.2024
(73) Patentinhaber: Robert Bosch GmbH, 70442 Stuttgart (DE)
(72) Erfinder: RAU, Andreas, 70469 Stuttgart (DE); SOUBARI, Joachim, 76275 Ettlingen (DE); SCHAICH, Udo, 70378 Stuttgart (DE)
(86) Internationale Anmeldenummer: PCT/EP2022/063416
(87) Internationale Veröffentlichungsnummer: WO 2022/258327

(56) Entgegenhaltungen:
- DE-A1- 102006 027 712
- US-A1- 2018 038 507
- US-B2- 9 194 354
- US-B2- 9 347 580

## Beschreibung

### Technisches Gebiet

Die vorliegende Erfindung betrifft ein Brennstoffzellensystem, eine Gastankvorrichtung, insbesondere für ein Brennstoffzellensystem und ein Absperrventil für eine Gastankvorrichtung.

### Stand der Technik

Brennstoffzellensysteme umfassen üblicherweise eine Brennstoffzellenanordnung, z.B. in Form eines Stacks mit einer Vielzahl elektrisch in Reihe geschalteter Brennstoffzellen, welcher über eine Brennstoffzufuhrleitung gasförmiger Brennstoff, z.B. Wasserstoff, aus einem Tank zugeführt wird. Sowohl in stationären als auch in mobilen Anwendungen, wie z.B. in einem Fahrzeug, steht der gasförmige Brennstoff in dem Tank üblicherweise unter hohem Druck, welcher beispielsweise bis zu 700 bar oder mehr betragen kann. Der Tank bildet somit ein Hochdruckreservoir. Der Brennstoffzellenanordnung wird der Brennstoff üblicherweise mit geringerem Druck zugeführt, z.B. mit einem Druck im Bereich zwischen 2 bar und 20 bar. Die Brennstoffzufuhrleitung bildet eine Versorgungsleitung. Die Brennstoffzufuhrleitung kann beispielsweise durch eine Druckregelungsvorrichtung, in welcher der Druck des Brennstoffs reduziert wird, mit dem Tank verbunden sein. Die Leitung zwischen Tank und Druckregelungsvorrichtung ist üblicherweise als Hochdruckleitung ausgeführt und wird im Folgenden als Versorgungsleitung bezeichnet, da über diese das Brennstoffzellensystem mit Brennstoff versorgt wird. Der Tank ist üblicherweise mit einem Absperrventil versehen, um einen Brennstoffaustritt aus dem Tank abzusperren, z.B. wenn die Brennstoffzellenanordnung außer Betrieb genommen wird oder im Fall eines Defekts.

Derartige Absperrventile für Hochdruckgastanks sind in der Regel als stromlos geschlossene Magnetventile konzipiert. Typischerweise wird eine Ventilnadel durch eine Feder gegen einen Dichtsitz vorgespannt und ist durch eine mittels einer Spule erzeugbare magnetische Kraft gegen die Vorspannkraft der Feder von dem Dichtsitz abhebbar. Aufgrund des hohen Drucks im Tank können je nach Bauart des Ventils hohe Öffnungskräfte erforderlich sein, was die Miniaturisierung des Ventils erschwert.

Die DE 10 2006 027 712 A1 offenbart ein Absperrventil für eine Gastankvorrichtung, aufweisend: ein Gehäuse mit einer Einlassöffnung zur Verbindung mit einem Hochdrucktank, einer Auslassöffnung zur Verbindung mit einer Versorgungsleitung und einer Steueröffnung geeignet zur Verbindung mit der Versorgungsleitung, wobei das Gehäuse einen sich entlang einer Längsachse erstreckenden Innenraum definiert und einen Trennsteg aufweist, welcher den Innenraum in Bezug auf die Längsachse in eine Auslasskammer und eine Steuerkammer unterteilt, wobei der Trennsteg eine Führuingsbohrung aufweist, welche sich zwischen der Auslasskammer und der Steuerkammer erstreckt.

Aus der US 9 347 580 B2 ist eine Ventilvorrichtung bekannt, die einen Hauptventilkörper umfasst, der zwischen einer ersten Druckkammer eines Hauptdurchgangs und einer zweiten Druckkammer angeordnet ist, und die einen Vorsteuerventilkörper umfasst, der in der zweiten Druckkammer vorgesehen ist.

In der US 2018/038507 A1 ist eine Ventilvorrichtung gezeigt, die ein Hauptventilelement umfasst, das einen Ventilelementraum eines Gehäuses in eine erste und zweite Druckkammer teilt.

In der US 9 194 354 B2 ist ein Brenngasversorgungs- und Füllsystemgezeigt, für eine Brenngasverbrauchseinheit, die in der Lage ist, einen Zufuhrkanal sowohl beim Abfüllen als auch beim Zuführen zu verwenden und die Luftdichtheit und Zuverlässigkeit eines Füllkanals zu verbessern.

### Offenbarung der Erfindung

Erfindungsgemäß ist ein Absperrventil mit den Merkmalen des Anspruchs 1, eine Gastankvorrichtung mit den Merkmalen des Anspruchs 10 und ein Brennstoffzellensystem mit den Merkmalen des Anspruchs 12 vorgesehen.

Gemäß einem ersten Aspekt der Erfindung umfasst ein Absperrventil für eine Gastankvorrichtung ein Gehäuse mit einer Einlassöffnung zur Verbindung mit einem Hochdrucktank, einer Auslassöffnung zur Verbindung mit einer Versorgungsleitung, und einer Steueröffnung zur Verbindung mit der Versorgungsleitung, wobei das Gehäuse einen sich entlang einer Längsachse erstreckenden Innenraum definiert und einen Trennsteg aufweist, welcher den Innenraum in Bezug auf die Längsachse in eine Auslasskammer und eine Steuerkammer unterteilt, wobei der Trennsteg eine Führungsbohrung aufweist, welche sich zwischen der Auslasskammer und der Steuerkammer erstreckt. Weiterhin weist das Absperrventil eine in dem Trennsteg aufgenommene und die Führungsbohrung umschließende elektrische Spule und eine in der Steuerkammer angeordnete Servoventilnadel auf, welche entlang der Längsachse in eine Schließstellung vorgespannt ist, in der die Servoventilnadel die Steueröffnung abdichtet, und mittels eines durch die Spule erzeugbaren Magnetfelds in eine Öffnungsstellung bewegbar ist, in der die Servoventilnadel die Steueröffnung freigibt und an dem Trennsteg anliegt, wobei die Servoventilnadel einen Verbindungskanal aufweist, welcher die Steuerkammer in der Öffnungsstellung der Servoventilnadel mit der Führungsbohrung verbindet. Außerdem umfasst das Absperrventil eine in der Führungsbohrung entlang der Längsachse bewegbar geführte Hauptventilnadel, welche entlang der Längsachse in eine Schließstellung vorgespannt ist, in der die Hauptventilnadel die Auslassöffnung abdichtet, und, wenn die Servoventilnadel in ihrer Öffnungsstellung angeordnet ist, mittels des durch die Spule erzeugbaren Magnetfelds in eine Öffnungsstellung bewegbar ist, in der die Hauptventilnadel die Auslassöffnung freigibt.

Gemäß einem zweiten Aspekt der Erfindung umfasst eine Gastankvorrichtung, insbesondere für ein Brennstoffzellensystem, einen Hochdruckgastank zur Aufnahme von Gas, wie z.B. Wasserstoff, und ein Absperrventil nach dem ersten Aspekt der Erfindung, wobei die Einlassöffnung des Gehäuses des Absperrventils mit einer Auslassöffnung des Hochdruckgastanks verbunden ist.

Gemäß einem zweiten Aspekt der Erfindung umfasst ein Brennstoffzellensystem eine Brennstoffzellenanordnung mit zumindest einer Brennstoffzelle, einem Brennstoffeinlass zum Zuführen von gasförmigem Brennstoff, einem Oxidationsgaseinlass zum Zuführen von Oxidationsgas und einem Produktauslass zum Abführen von Reaktionsprodukten, eine mit dem Brennstoffeinlass verbundene Brennstoffzufuhrleitung und eine Gastankvorrichtung nach dem zweiten Aspekt der Erfindung, wobei die Auslassöffnung und die Steueröffnung des Gehäuses des Absperrventils jeweils mit der Brennstoffzufuhrleitung verbunden sind.

Eine der Erfindung zugrundeliegende Idee besteht darin, in einem Gehäuse eine Servoventilnadel und eine Hauptventilnadel anzuordnen, welche beide durch ein und dieselbe Spule betätigbar sind. Eine durch die Servoventilnadel verschließbare Steueröffnung und ein durch die Hauptventilnadel verschließbarer Hochdruckauslass sind beide mit derselben Versorgungsleitung verbindbar, so dass an diesen dasselbe Druckniveau anliegt.

Die Versorgungssicherheit der Brennstoffzelle mit Brennstoff kann verbessert werden, wenn das Absperrventil sowohl bei niedrigem als auch bei hohem Druckniveau in der Versorgungsleitung sowie bei gleichem Druckniveau in Tank und in der Versorgungsleitung zuverlässig geöffnet wreden kann.

Nachfolgend wird beispielhaft das Prinzipt des Öffnungsvorgangs bei niedrigerem Druckniveau in der Versorgungleitung als im Tank beschrieben.

Wenn die Spule bestromt wird, bildet sich ein primärer Magnetkreis aus, welcher eine auf die Servoventilnadel wirkende Magnetkraft erzeugt und die Servoventilnadel in eine Öffnungsstellung bewegt. Dadurch gibt die Servoventilnadel die Steueröffnung frei und der Druck in einem Steuerraum bzw. einer Steuerkammer des Gehäuses, in dem die Servoventilnadel angeordnet ist, wird abgesenkt. Die Hauptventilnadel ist in einer Führungsbohrung axial geführt, welche in einer die Steuerkammer von einer Auslasskammer trennenden Trennwandung des Gehäuses ausgebildet ist, wobei die Auslasskammer über einen Einlass mit einem Gastank bzw. einem Hochdruckreservoir verbunden oder verbindbar ist. Über einen in der Servoventilnadel vorgesehenen Kanal besteht eine fluidisch leitende Verbindung zwischen der Führungsbohrung und der Steuerkammer. Folglich wird beim Öffnen des Ventils eine Druckabsenkung in der Führungsbohrung erzielt und somit eine Zugkraft auf die Hauptventilnadel ausgeübt. Wenn die Servoventilnadel geöffnet ist, liegt diese außerdem an der Trennwandung des Gehäuses an, so dass sich bei fortbestehender Bestromung der Spule ein sekundärer Magnetkreis ausbildet, welcher eine auf die Hauptventilnadel wirkende Magnetkraft erzeugt. Da die Hauptventilnadel außerdem durch den verringerten Druck in der Steuerkammer mit einer Zugkraft beaufschlagt wird, kann bereits durch eine geringe von der Spule erzeugte Magnetkraft ein Öffnen der Hauptventilnadel erfolgen. Ein Druckgradient sowie ein minimal mögliches Druckniveau im Steuerraum bzw. der Steuerkammer ergibt sich aus der Abfluss-Drosselung, kurz A-Drossel am Ventilsitz der Servoventilnadel und der Zulauf-Drosselung, kurz Z-Drossel, einer pneumatischen Verbindung zwischen Steuerkammer und Auslasskammer sowie dem jeweiligen ablauf- und zulaufseitigen Druckniveau.

Nachflgend der Öffnungsvorgang bei gleichem oder annähernd gleichem Druckniveau in Versorgungleitung und Tank beschrieben.

Wenn die Spule bestromt wird, bildet sich wieder ein primärer Magnetkreis aus, welcher eine auf die Servoventilnadel wirkende Magnetkraft erzeugt und die Servoventilnadel in die Öffnungsstellung bewegt. Aufgrund gleicher Druckniveaus in Versorgungsleitung, Steuerkammer und Auslasskammer ist die Druckdifferenz am Servoventilsitz und Hauptventilsitz jeweils null oder nahezu null. Nach erfolgter Öffnung des Servoventils reicht darum das sekundäre Magnetfeld am Anker des Hauptventils aus, auch ohne pneumatische Unterstützung durch den Steuerraum, das Hauptventil gegen die Kraft der Feder vollständig aufzuziehen.

Ein Vorteil der Erfindung ist daher, dass die Hauptventilnadel auch bei großen Druckdifferenzen zwischen dem Hochdruckgastank und der Versorgungsleitung mit einer geringen Öffnungskraft aus der Schließstellung in die Öffnungsstellung bewegbar ist. Folglich kann die Spule, welche die Öffnungskraft zumindest teilweise erzeugt, relativ klein dimensioniert werden, so dass ein kompakt aufgebautes Absperrventil realisiert wird. Ferner ist an der erfindungsgemäßen Gestaltung des Absperrventils vorteilhaft, dass ein Hub der Servoventilnadel unabhängig vom Hub der Hauptventilnadel ist. Insbesondere kann ein im Vergleich zum Hub der Servoventilnadel großer Hub der Hauptventilnadel bei kompakter Gestaltung der Spule realisiert werden. Ein weiterer Vorteil liegt darin, dass auch bei einem Druckausgleich zwischen der Steuerkammer und der Auslasskammer ein Schlie-ßen der Hauptventilnadel verhindert wird, da diese durch die von der Spule erzeugte Magnetkraft in ihrer Öffnungsstellung gehalten wird. Dies verringert vorteilhaft den Verschleiß des Absperrventils.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß manchen Ausführungsformen kann vorgesehen sein, dass der Trennsteg eine die Führungsbohrung umschließende Aufnahmeausnehmung aufweist, welche sich von der Steuerkammer aus entlang der Längsachse als Sackloch erstreckt, und wobei die Spule in der Aufnahmeausnehmung angeordnet ist. Die Aufnahmeausnehmung kann sich beispielsweise als ringförmige Öffnung von einer der Steuerkammer zugewandten Oberfläche aus erstrecken. Zwischen einem Boden der Aufnahmeausnehmung und einer der Auslasskammer zugewandten Oberfläche des Trennstegs ist somit ein Reststeg vorgesehen. Wenn die Servoventilnadel in ihrer Öffnungsstellung an dem Trennsteg anliegt, kann die Spule derart bestromt werden, dass sich in dem Reststeg magnetische Sättigung einstellt. Dies erleichtert die Erzeugung eines effizient auf die Hauptventilnadel wirkenden sekundären Magnetkreises oder -feldes.

Gemäß manchen Ausführungsformen kann vorgesehen sein, dass die Hauptventilnadel einen Schaft, welcher in einem ersten Endbereich in der Führungsbohrung geführt ist, und einen Dichtabschnitt aufweist, welcher in einem zweiten Endbereich des Schafts ausgebildet ist und in der Schließstellung der Hauptventilnadel an einem durch die Auslassöffnung definierten Hauptventilsitz anliegt. Der Schaft kann beispielsweise aus einem magnetisierbaren Material gebildet sein und wirkt vorteilhaft als Tauchanker.

Gemäß manchen Ausführungsformen kann vorgesehen sein, dass zwischen dem ersten Endbereich des Schafts der Hauptventilnadel und der Führungsbohrung ein Dichtelement zur fluidischen Trennung der Steuerkammer von der Auslasskammer vorgesehen ist. Beispielsweise kann das Dichtelement als Dichtring ausgeführt und an dem Schaft der Hauptventilnadel angebracht sein. Gemäß manchen Ausführungsformen kann vorgesehen sein, dass eine Drosselbohrung die Steuerkammer fluidisch mit der Auslasskammer verbindet. Eine pneumatische Verbindung zwischen der Steuerakmmer und der Auslasskammer kann somit über ein Führungsspiel zwischen der Hauptventilnadel bzw. dem Schaft der Hautpventilnadel und der Führungsbohrung ausgeführt sein oder, bei Verwendung von Dichtungselementen am Schaft der Hauptventilnadel, auch separat über eine Drosselbohrung als Bypass zur Dichtung.

Gemäß manchen Ausführungsformen kann vorgesehen sein, dass der Schaft der Hauptventilnadel in dem ersten Endbereich eine erste Querschnittsfläche aufweist, welche größer ist als eine zweite Querschnittsfläche des Hauptventilsitzes. Dadurch kann die durch die Druckabsenkung in der Steuerkammer erzeugte Zugkraft vorteilhaft weiter vergrößert werden, insbesondere derart, dass diese Zugkraft alleine ausreicht, um die Hauptventilnadel vom Hauptventilsitz abzuheben. Dadurch wird die von der Spule zu erzeugende Kraft weiter verringert, was vorteilhaft hinsichtlich einer kompakten Auslegung der Spule ist.

Gemäß manchen Ausführungsformen kann vorgesehen sein, dass die Hauptventilnadel einen von dem Schaft vorstehenden Flachanker aufweist, welcher in der Schließstellung der Hauptventilnadel beabstandet zu dem Trennsteg angeordnet ist und in der Öffnungsstellung der Hauptventilnadel an dem Trennsteg anliegt. Der Trennsteg ist aus einem magnetisierbaren Material hergestellt. Durch die radiale Erstreckung des Flachankers ist in der Schließstellung der Hauptventilnadel ein Spalt zwischen dem Trennsteg und dem Flachanker gebildet. Insbesondere in Kombination mit der oben beschriebenen Anordnung der Spule in der Aufnahmeausnehmung kann vorteilhaft die Kraftwirkung des von der Spule erzeugten sekundären Magnetfeldes auf die Hauptventilnadel weiter vergrößert werden.

Gemäß manchen Ausführungsformen kann vorgesehen sein, dass die Servoventilnadel einen Schaft, einen an einem ersten Endbereich des Schafts ausgebildeten Dichtabschnitt, und einen mit einem zweiten Endbereich des Schafts verbundenen Flachanker, der von dem Schaft vorsteht, aufweist, wobei in der Schließstellung der Servoventilnadel der Dichtabschnitt an einem durch die Steueröffnung definierten Servoventilsitz anliegt und der Flachanker beabstandet zu dem Trennsteg angeordnet ist, und wobei in der Öffnungsstellung der Servoventilnadel der Dichtabschnitt beabstandet zu dem Servoventilsitz angeordnet ist und der Flachanker an dem Trennsteg anliegt. Der Flachanker der Servoventilnadel bietet insbesondere den Vorteil, dass bei geringem Hub der Servoventilnadel eine große Öffnungskraft erzeugt werden kann.

Gemäß manchen Ausführungsformen kann vorgesehen sein, dass die Servoventilnadel und die Hauptventilnadel durch eine gemeinsame Feder, die in der Führungsbohrung angeordnet ist, in die jeweilige Schließstellung vorgespannt sind. Somit wird vorteilhaft die Anzahl der Teile verringert.

Gemäß manchen Ausführungsformen kann vorgesehen sein, dass das Absperrventil eine Steuerleitung aufweist, welche die Auslassöffnung und die Steueröffnung außerhalb des Innenraums fluidisch leitend miteinander verbindet und einen Anschluss zur Verbindung mit der Versorgungsleitung aufweist. Gemäß alternativen Ausführungsformen kann vorgesehen sein, dass das Gehäuse einen mit der Auslassöffnung verbundenen ersten Anschluss zur Verbindung mit der Versorgungsleitung und einen mit der Steueröffnung verbundenen zweiten Anschluss zur Verbindung mit der Versorgungsleitung aufweist. In beiden Alternativen ist auf einfache Weise dasselbe Niederdruckniveau an der Steueröffnung und der Auslassöffnung einstellbar.

Gemäß manchen Ausführungsformen der Gastankvorrichtung kann vorgesehen sein, dass das Gehäuse des Absperrventils in der Auslassöffnung des Hochdruckgastanks aufgenommen ist. Beispielsweise kann der Hochdruckgastank als Gasflasche mit einem im Wesentlichen zylindrischen Abschnitt und einem sich gegenüber dem zylindrischen Abschnitt verjüngenden Auslassabschnitt oder Hals aufweisen, in welchem die Auslassöffnung ausgebildet ist. Durch die kompakte Gestaltung des Absperrventils ist eine Unterbringung innerhalb des Auslassabschnitts möglich, wodurch das Absperrventil besser gegen mechanische Beschädigungen geschützt ist.

Im Folgenden wird die Erfindung unter Bezugnahme auf die Figuren der Zeichnungen erläutert. Von den Figuren zeigen:
- Fig. 1: eine schematische Schnittansicht eines Absperrventils gemäß einem Ausführungsbeispiel der Erfindung, wobei eine Servoventilnadel und eine Hauptventilnadel jeweils in einer Schließstellung angeordnet sind;
- Fig. 2: das in Fig. 1 gezeigte Absperrventil, wobei die Servoventilnadel in einer Öffnungsstellung und die Hauptventilnadel in einer Schließstellung angeordnet ist;
- Fig. 3: das in Fig. 1 gezeigte Absperrventil, wobei die Servoventilnadel und die Hauptventilnadel jeweils in einer Öffnungsstellung angeordnet sind; und
- Fig. 4: eine schematische Darstellung eines hydraulischen Schaltbildes eines Brennstoffzellensystems gemäß einem Ausführungsbeispiel der Erfindung.

In den Figuren bezeichnen dieselben Bezugszeichen gleiche oder funktionsgleiche Komponenten, soweit nichts Gegenteiliges angegeben ist.

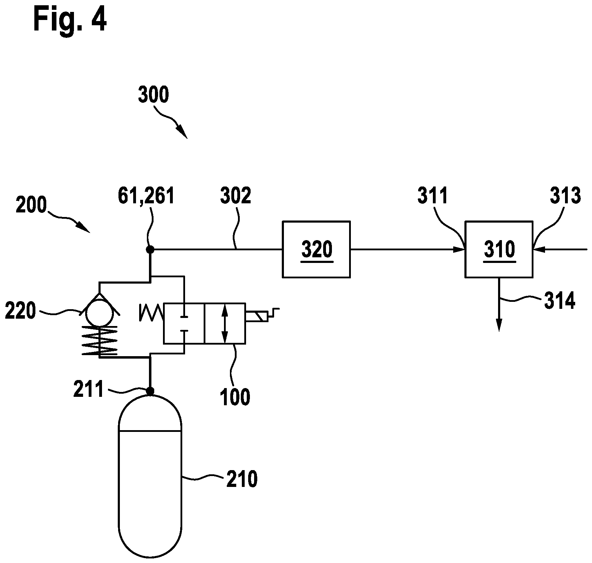

In Fig. 4 ist beispielhaft und schematisch ein Brennstoffzellensystem 300 dargestellt. Wie in Fig. 4 schematisch gezeigt, umfasst das Brennstoffzellensystem 300 eine Brennstoffzellenanordnung 310, eine Brennstoffzufuhrleitung 302, eine optionale Druckregelungsvorrichtung 320 und eine Gastankvorrichtung 200.

Die Brennstoffzellenanordnung 310 ist in Fig. 4 lediglich als Block dargestellt und weist zumindest eine Brennstoffzelle (nicht gezeigt), einen Brennstoffeinlass 311, einen Oxidationsgaseinlass 313 und einen Produktauslass 314 auf. Die Brennstoffzellenanordnung kann beispielsweise eine Vielzahl elektrisch in Reihe geschalteter Brennstoffzellen aufweisen, z.B. in Form eines sogenannten Stacks. Jede Brennstoffzelle weist eine Anode, eine Kathode und eine zwischen Anode und Kathode angeordnete Elektrolytschicht, z.B. in Form einer Membrane auf. Über den Brennstoffeinlass 311 kann der oder den Brennstoffzellen 210 gasförmiger Brennstoff, z.B. Wasserstoff, an die Anoden zugeführt werden. In gleicher Weise kann über den Oxidationsgaseinlass 213 der oder den Brennstoffzellen 210 Oxidationsgas, z.B. sauerstoffhaltige Umgebungsluft, an die Kathoden zugeführt werden kann. Über den Produktauslass 214 können die Reaktionsprodukte von der Kathode abgeführt werden. Die zumindest eine Brennstoffzelle ist somit dazu eingerichtet, die im Brennstoff gespeicherte chemische Energie zusammen mit Oxidationsgas direkt in elektrische Energie umzuwandeln.

Die Gastankvorrichtung 200 weist einen Hochdruckgastank 210 und ein Absperrventil 100 auf. Der Hochdruckgastank 210, im Folgenden aus Gründen der Übersichtlichkeit auch lediglich als Tank bezeichnet, ist zur Aufnahme von Gas, wie z.B. Wasserstoff ausgebildet und kann z.B. Gas bei einem Druck bis zu 700 bar speichern. Wie in Fig. 4 schematisch dargestellt, kann der Tank 210 als im Wesentlichen zylindrischer Tank mit ausgebildet sein. Eine Auslassöffnung 211 des Tanks 210 kann z.B. an einem axialen Ende des Tanks 210 angeordnet sein. Das Absperrventil 100 ist in Fig. 4 lediglich symbolisch dargestellt und wird nachfolgend noch im Detail erläutert. Wie in Fig. 4 schematisch gezeigt, ist das Absperrventil 100 mit der Auslassöffnung 211 und einem Niederdruckanschluss 261 des Tanks 210 verbunden. Optional kann ein Rückschlagventil 220 parallel zu dem Absperrventil 100 geschalten sein, wie dies in Fig. 4 beispielhaft gezeigt ist. Die Brennstoffzufuhrleitung 302 verbindet den Niederdruckanschluss 261 der Gastankvorrichtung 200 mit dem Brennstoffeinlass 311 der Brennstoffzellenanordnung 310. Die optionale Druckregelvorrichtung 320 ist zwischen dem Niederdruckanschluss 261 und dem Brennstoffeinlass 311 in der Brennstoffzufuhrleitung 302 angeordnet und dazu eingerichtet, den Druck des aus dem Tank 210 ausströmenden Gases zu reduzieren und/oder die Durchflussmenge zu variieren. Beispielsweise kann die Druckregelvorrichtung 320 ein durchflussregelbares Drosselventil aufweisen.

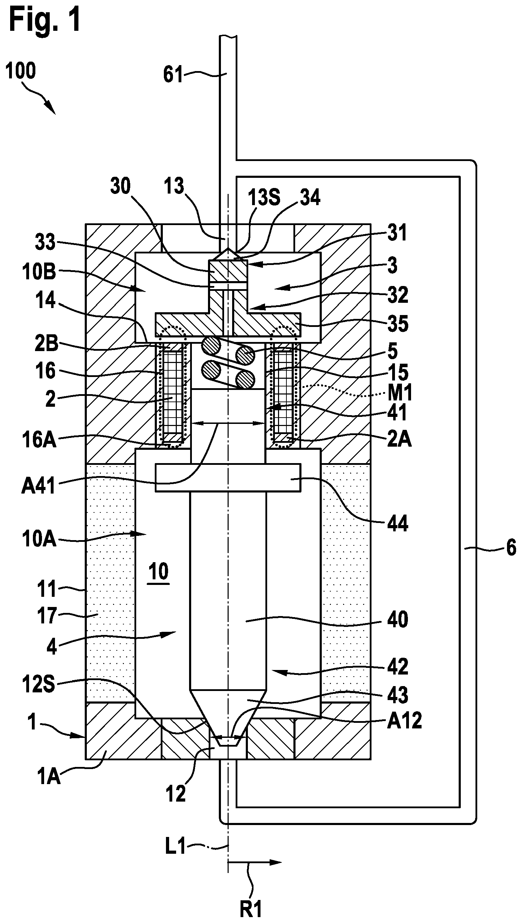

In Fig. 1 ist eine schematische Schnittansicht eines beispielhaften Absperrventils 100 dargestellt, wie es z.B. in der in Fig. 4 gezeigten Gastankvorrichtung 200 verwendet werden kann. Wie in Fig. 1 schematisch dargestellt, weist das Absperrventil 100 ein Gehäuse 1, eine elektrische Spule oder Induktionsspule 2, eine Servoventilnadel 3, eine Hauptventilnadel 4 und eine Feder 5 auf. Optional kann das Absperrventil 100 ferner eine Steuerleitung 6 aufweisen, wie dies in Fig. 1 schematisch dargestellt ist.

Das Gehäuse 1 kann insbesondere einen Basiskörper 1A aufweisen, welcher einen sich entlang einer Längsachse L1 erstreckenden Innenraum 10 definiert. Wie in Fig. 1 schematisch dargestellt, ist in dem Innenraum 10 des Gehäuses 1 ein Trennsteg oder eine Trennwand 14 angeordnet, welches den Innenraum 10 in Bezug auf die Längsachse L1 in eine erste Kammer oder Auslasskammer 10A und eine zweite Kammer oder Steuerkammer 10B unterteilt. Der Trennsteg 14 kann sich insbesondere in einer quer zur Längsachse L1 verlaufenden radialen Richtung R1 erstrecken, wie dies in Fig. 1 beispielhaft gezeigt ist. Der Trennsteg 14 kann insbesondere aus einem magnetisierbaren Material ausgebildet sein.

In dem Trennsteg 14 ist eine Führungsbohrung 15 ausgebildet, welche die Steuerkammer 10B und die Auslasskammer 10A miteinander verbindet. Die Führungsbohrung 15 kann beispielsweise koaxial zur Längsachse L1 angeordnet und ausgerichtet sein, wie in Fig. 1 schematisch gezeigt. Optional kann der Trennsteg 14 ferner eine Aufnahmeausnehmung 16 aufweisen. Wie in Fig. 1 schematisch dargestellt, kann sich die Aufnahmeausnehmung sich von einer der Steuerkammer 10B zugewandten Oberfläche des Trennstegs 14 aus entlang der Längsachse L1 erstrecken und beabstandet zu einer der Auslasskammer 10A zugewandten Oberfläche des Trennstegs 14 enden. Die Aufnahmeausnehmung 16 erstreckt sich somit von der Steuerkammer 10B aus entlang der Längsachse L1 als Sackloch. Zwischen der der Steuerkammer 10B zugewandten Oberfläche des Trennstegs 14 und dem Boden bzw. dem Ende der Aufnahmeausnehmung 16 ist somit ein Reststeg 16A vorhanden. Wie in Fig. 1 ferner schematisch gezeigt ist, umschließt die Aufnahmeausnehmung 16 die Längsachse L1 bzw. die Führungsbohrung 15. Beispielsweise kann die Aufnahmeausnehmung 16 ringoder rahmenförmig um die Führungsbohrung 16 herum ausgebildet sein.

Wie in Fig. 1 weiterhin gezeigt, weist das Gehäuse 1 eine Einlassöffnung 11, eine Auslassöffnung 12 und eine Steueröffnung 13 auf. Die Einlassöffnung 11 dient zur Verbindung mit einem Hochdruckreservoir. Beispielsweise kann die Einlassöffnung 11 mit der Auslassöffnung 211 des Tanks 210 verbunden sein. Wie in Fig. 1 beispielhaft gezeigt, kann das Basisteil 1A des Gehäuses 1 mehrere sich in der radialen Richtung R1 zwischen der Auslasskammer 10A und einer Außenseite erstreckende Ausnehmungen als Einlassöffnungen 11 aufweisen. Allgemein ist die Einlassöffnung 11 mit der ersten Kammer bzw. der Auslasskammer 10A verbunden. Wie in Fig. 1 außerdem erkennbar ist, kann in der Einlassöffnung 11 optional ein Filter 17 angeordnet sein.

Die Auslassöffnung 12 kann insbesondere koaxial zu der Längsachse L1 angeordnet sein und sich in dem Basisteil 1A zwischen der Auslasskammer 10A und der Außenseite erstrecken, wie dies in Fig. 1 beispielhaft gezeigt ist. Allgemein ist die Auslassöffnung 12 mit der Auslasskammer 10A verbunden.

Die Steueröffnung 13 kann in Bezug auf die Längsachse L1 insbesondere gegenüberliegend zu der Auslassöffnung 12 angeordnet sein, wie dies in Fig. 1 beispielhaft gezeigt ist. Die Steueröffnung 13 ist mit der Steuerkammer 10B verbunden. Wie in Fig. 1 gezeigt, kann die Steueröffnung 13 beispielsweise koaxial zu der Längsachse L1 angeordnet sein und sich in dem Basisteil 1A zwischen der Steuerkammer 10B und der Außenseite erstrecken.

Wie in Fig. 1 rein beispielhaft und schematisch gezeigt ist, können die Auslassöffnung 11 und die Steueröffnung 13 durch die optionale Steuerleitung 6 fluidisch leitend miteinander verbunden sein, wobei die Steuerleitung 6 außerhalb des Innenraums 10 bzw. fluidisch getrennt oder isoliert von dem Innenraum 10 des Gehäuses 1 verläuft. Die Steuerleitung 61 kann z.B. einen Anschluss 61 zur Verbindung mit der Versorgungsleitung 302 aufweisen. Beispielsweise kann der Anschluss 61 der Steuerleitung 61 den Niederdruckanschluss 261 der Gastankvorrichtung 200 bilden, wie dies in Fig. 4 schematisch dargestellt ist. Alternativ kann das Gehäuse 1 einen mit der Auslassöffnung 11 verbundenen ersten Anschluss (in Fig. 1 nicht gezeigt) und einen mit der Steueröffnung 13 verbundenen zweiten Anschluss (in Fig. 1 nicht gezeigt) aufweisen, wobei der erste und der zweite Anschluss jeweils mit der Versorgungsleitung 302 verbindbar sind. In diesem Fall bilden der erste und der zweite Anschluss gemeinsam den Niederdruckanschluss 261 der Gastankvorrichtung 200. Allgemein sind die Steueröffnung 13 und die Auslassöffnung 12 jeweils an dasselbe Druckniveau, insbesondere an dieselbe Versorgungsleitung anschließbar oder angeschlossen.

Die Spule 2 weist eine Vielzahl an Wicklungen aus einem elektrischen Leiter auf und ist in Fig. 1 lediglich symbolisch dargestellt. Wie in Fig. 1 gezeigt, kann die Spule 2 beispielsweise in der Aufnahmeausnehmung 16 des Trennstegs 14 aufgenommen sein. Zwischen dem Boden der Aufnahmeausnehmung 16 und der Spule 2 kann insbesondere eine magnetisch isolierende Schicht 2A angeordnet sein. Ebenso kann die Aufnahmeausnehmung 16 an ihrem der Steuerkammer 10B zugewandten Ende durch eine magnetisch isolierende Schicht 2B verschlossen sein, wie dies in Fig. 1 beispielhaft gezeigt ist. Die Spule 2 ist allgemein in dem Trennsteg 14 aufgenommen und umschließt die Führungsbohrung 15.

Die Servoventilnadel 3 ist in der Steuerkammer 10B angeordnet. Wie in Fig. 1 beispielhaft gezeigt ist, kann die Servoventilnadel 3 einen Schaft 30, einen Verbindungskanal 33 und einen Dichtabschnitt 34 aufweisen. Ferner kann die Servoventilnadel 3 optional einen Flachanker 35 aufweisen. Der Schaft 30 erstreckt sich zwischen einem ersten Endbereich 31 und einem diesem gegenüberliegenden zweiten Endbereich 32. Der Dichtabschnitt 34 ist in dem ersten Endbereich 31 des Schafts 30 ausgebildet und kann insbesondere ein erstes Ende des Schafts 30 bilden. Beispielsweise kann der Dichtabschnitt 34 konusförmig ausgebildet sein, wie dies in Fig. 1 schematisch dargestellt ist. Der Verbindungskanal 33 kann beispielsweise durch eine sich quer durch den Schaft 30 erstreckende Querbohrung und eine sich zwischen einem zweiten Ende und der Querbohrung erstreckende Axialbohrung gebildet sein, wie dies in Fig. 1 schematisch dargestellt ist. Alternativ wäre auch denkbar, den Verbindungskanal durch eine sich schräg zwischen einer Umfangsfläche des Schafts 30 und dem zweiten Ende des Schafts 30 erstreckende Bohrung zu realisieren. Der optionale Flachanker 35 ist in dem zweiten Endbereich des Schafts 30 angeordnet und mit diesem verbunden. Wie in Fig. 1 schematisch dargestellt, erstreckt sich der Flachanker 35 quer zu dem Schaft 30 und steht von diesem vor. Der Flachanker 35 kann z.B. als um den Schaft 30 umlaufender Steg ausgebildet sein, wie dies in Fig. 1 schematisch dargestellt ist. Zumindest der Flachanker 35, vorzugsweise auch der Schaft 30, ist aus einem magnetisierbaren Material ausgebildet.

Wie in Fig. 1 schematisch dargestellt, ist die Servoventilnadel 3 derart in der Steuerkammer 10B angeordnet und ausgerichtet, dass der Schaft 30 sich entlang der Längsachse L1 und der Flachanker 35 sich entlang der radialen Richtung R1 erstreckt, wobei der Schaft 30 insbesondere koaxial zu der Längsachse L1 angeordnet bzw. ausgerichtet sein kann. Der erste Endbereich 31 mit dem Dichtabschnitt 31 ist dabei der Steueröffnung 13 zugewandt, und der zweite Endbereich 32 mit dem Flachanker 35 ist dem Trennsteg 14 zugewandt gelegen.

Wie in Fig. 1 weiter schematisch gezeigt ist, spannt die Feder 5 die Servoventilnadel 3 in eine Schließstellung vor, in der die Servoventilnadel 3 die Steueröffnung 13 abdichtet. Insbesondere kann in der Schließstellung der Servoventilnadel 3 der Dichtabschnitt 34 an einem durch die Steueröffnung 13 definierten Servoventilsitz 13S anliegen und der Flachanker 35 kann beabstandet zu dem Trennsteg 14 angeordnet sein, wie dies in Fig. 1 schematisch dargestellt ist. Der Dichtsitz 13S kann insbesondere durch einen die Steueröffnung 13 umgebenden Bereich des Gehäuses 1 gebildet sein. Zwischen dem Flachanker 35 und dem Trennsteg 14 ist in der Schließstellung der Servoventilnadel 3 ein Spalt ausgebildet, wie dies in Fig. 1 schematisch gezeigt ist. Die Servoventilnadel 3 ist allgemein entlang der Längsachse L1 in eine Schließstellung vorgespannt ist, in der die Servoventilnadel 3 die Steueröffnung 13 abdichtet.

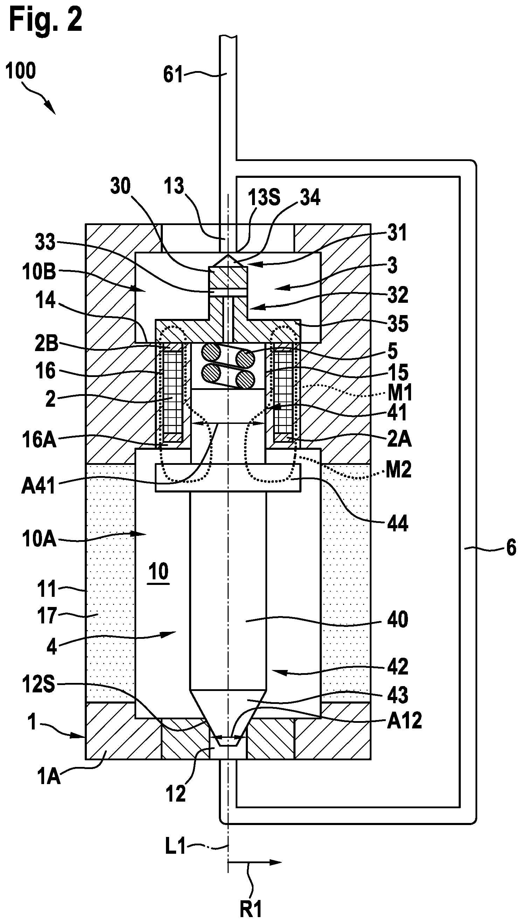

Durch Anlegen einer elektrischen Spannung an die Spule 2, welche einen Stromfluss durch die Spule 2 erzeugt, kann um die Spule 2 ein Magnetfeld, insbesondere ein primäres Magnetfeld M1 erzeugt werden, welches eine Anziehungskraft auf die Steuerventilnadel 30 ausübt. Die Servoventilnadel 3 wird dadurch entgegen der durch die Feder 5 ausgeübte Vorspannkraft in Richtung des Trennstegs 14 bewegt, wodurch der Dichtabschnitt 34 von dem Dichtsitz 13S abgehoben wird. Allgemein ist die Servoventilnadel 3 somit mittels eines durch die Spule 2 erzeugbaren Magnetfelds entlang der Längsachse L1 in eine Öffnungsstellung bewegbar. Die Öffnungsstellung der Servoventilnadel 3 ist schematisch in Fig. 2 dargestellt. Wie in Fig. 2 schematisch gezeigt, ist der Dichtabschnitt 34 in der Öffnungsstellung der Servoventilnadel 3 beabstandet zu dem Servoventilsitz 13S angeordnet ist und der Flachanker 35 liegt an dem Trennsteg 14 an. Allgemein gibt die Servoventilnadel 3 in der Öffnungsstellung somit die Steueröffnung 13 frei und liegt an dem Trennsteg 14 an. Wie in Fig. 2 schematisch dargestellt, stellt ist die Führungsbohrung 15 in der Öffnungsstellung der Servoventilnadel 3 durch den Verbindungskanal 33 fluidisch leitend mit der Führungsbohrung 15 verbunden.

Die Hauptventilnadel 4 ist in der Auslasskammer 10A angeordnet. Wie in Fig. 1 schematisch dargestellt, kann die Hauptventilnadel 40 einen Schaft, einen Dichtabschnitt 43 und einen optionalen Flachanker 44 aufweisen. Der Schaft 40 der Hauptventilnadel 4 erstreckt sich zwischen einem ersten Endbereich 41 und einem diesem gegenüberliegenden zweiten Endbereich 42. Der Dichtabschnitt 43 ist in dem zweiten Endbereich 42 des Schafts 40 ausgebildet und kann insbesondere ein zweites Ende des Schafts 40 bilden. Beispielsweise kann der Dichtabschnitt 43 konusförmig ausgebildet sein, wie dies in Fig. 1 schematisch dargestellt ist. Der optionale Flachanker 44 benachbart zu dem ersten Endbereich 41 des Schafts 40 angeordnet sein und ist mit dem Schaft 40 verbunden. Wie in Fig. 1 schematisch dargestellt, erstreckt sich der Flachanker 44 quer zu dem Schaft 40 und steht von diesem vor. Zumindest der Flachanker 44, vorzugsweise auch der Schaft 40 der Hauptventilnadel 4, ist aus einem magnetisierbaren Material ausgebildet.

Wie in Fig. 1 schematisch dargestellt, ist die Hauptventilnadel 4 derart in der Auslasskammer 10A angeordnet, dass der erste Endbereich 41 des Schafts in die Führungsbohrung 15 hineinragt und durch die Führungsbohrung 15 geführt ist und der zweite Endbereich 42 mit dem Dichtabschnitt 43 der Auslassöffnung 12 zugewandt gelegen ist. Insbesondere kann der Schaft 40 der Hauptventilnadel 4 koaxial zu der Längsachse L1 ausgerichtet sein. Der Flachanker 44, welcher z.B. als um den Schaft 40 umlaufender Steg ausgebildet sein kann, steht somit in der radialen Richtung R1 vom Schaft 40 vor.

Fig. 1 zeigt die Hauptventilnadel 4 in einer Schließstellung, in welcher diese die Auslassöffnung 12 abdichtet. Wie in Fig. 1 schematisch dargestellt, wird die Hauptventilnadel 4 durch die Feder 5 in die Schließstellung vorgespannt. Optional kann ein und dieselbe Feder 5, welche in der Führungsbohrung 15 angeordnet sein kann, wie in Fig. 1 beispielhaft gezeigt, die Hauptventilnadel 4 und die Servoventilnadel 3 jeweils in ihre Schließstellung vorspannen. Es ist jedoch auch denkbar, dass für die Hauptventilnadel 4 und die Servoventilnadel 3 jeweils getrennte Federn vorgesehen sind. Diese können auch außerhalb der Führungsbohrung 15 angeordnet sein. Wie in Fig. 1 schematisch dargestellt, liegt der Dichtabschnitt 43 in der Schließstellung der Hauptventilnadel 4 an einem durch die Auslassöffnung 12 definierten Hauptventilsitz 12S an, und der Flachanker 44 ist beabstandet zu dem Trennsteg 14 angeordnet, so dass ein Spalt zwischen dem Trennsteg 14 und dem Flachanker 44 ausgebildet ist. Der Hauptventilsitz 12S kann beispielsweise durch einen die Auslassöffnung 12 umgebenden Bereich gebildet sein. Der Schaft 40 der Hauptventilnadel weist in dem ersten Endbereich 41 eine erste Querschnittsfläche A41 auf. Eine zweite Querschnittsfläche A12 ist durch eine Fläche definiert, durch den Hauptventilsitz 12S umgrenzt wird.

Wie in Fig. 1 schematisch dargestellt, ist die erste Querschnittsfläche A12 größer als eine zweite Querschnittsfläche A12.

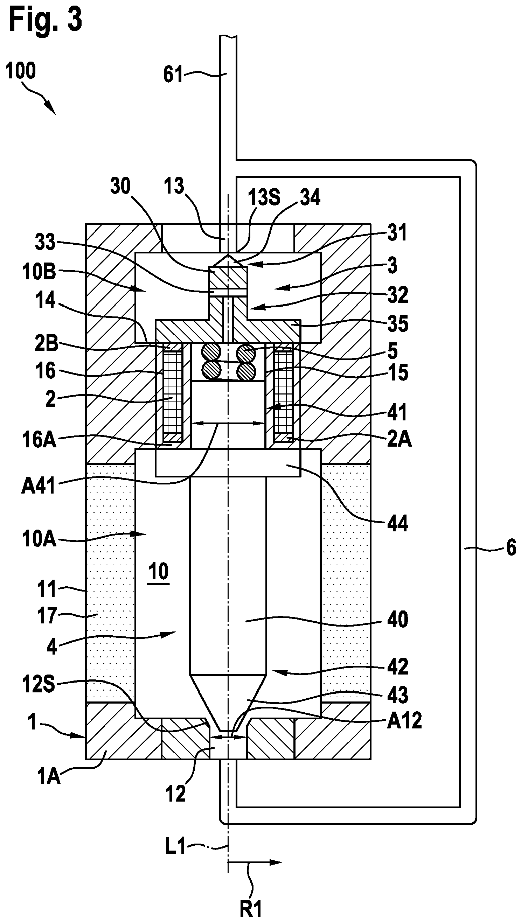

Wenn die Servoventilnadel 3 in ihrer Öffnungsstellung angeordnet ist, wie dies in Fig. 2 schematisch dargestellt ist, wird die Steuerkammer 10B durch die Steueröffnung 13 fluidisch leitend mit dem Druckniveau des Anschlusses 61 verbunden, was typischerweise zu einer Druckabsenkung in der Steuerkammer 10B führt. Allgemein findet ein Druckausgleich zwischen der Steuerkammer 10B und dem Anschluss 61 statt, weshalb es auch zu einem Druckausgleich zwischen der Steueröffnung 13 und der Auslassöffnung 12 kommt. Über den Verbindungskanal 33 findet eine Druckabsenkung relativ zur Auslasskammer 10A auch in der Führungsbohrung 15 statt, weshalb die Hauptventilnadel 4 mit einer Zugkraft beaufschlagt wird, die entgegengesetzt zu der von der Feder 5 erzeugten Vorspannkraft wirkt. Je nach Druckdifferenz zwischen der Führungsbohrung 15 und der Auslasskammer 10A, kann diese Zugkraft ausreichen, um den Dichtabschnitt 43 der Hauptventilnadel 40 vom Hauptventilsitz 12S abzuheben. Dies wird insbesondere erleichtert, wenn die zweite Fläche A12 kleiner als die erste Fläche A41 ist. Da die Spule 2 weiter bestromt wird, wenn die Servoventilnadel 3 in der Öffnungsstellung angeordnet ist, bildet sich ein sekundäres Magnetfeld M2 aus, welches in Fig. 2 rein schematisch eingezeichnet ist. Das sekundäre Magnetfeld M2 übt ebenfalls eine gegen die Federkraft wirkende Zugkraft auf die Hauptventilnadel 4 aus, so dass diese in die in Fig. 3 eingezeichnete Öffnungsstellung bewegt wird. Wie in Fig. 3 gezeigt, liegt der optionale Flachanker 44 in der Öffnungsstellung der Hauptventilnadel 4 an dem Trennsteg 14 an und bildet somit vorteilhaft einen Anschlag aus. Der Dichtabschnitt 43 der Hauptventilnadel 4 ist in deren Öffnungsstellung beabstandet zu dem Hauptventilsitz 12S angeordnet. Allgemein gibt die Hauptventilnadel 4 in deren Öffnungsstellung somit die Auslassöffnung 11 frei.

Die Hauptventilnadel 4 ist somit mittels des durch die Spule 2 erzeugbaren Magnetfelds in die Öffnungsstellung bewegbar, wenn die Servoventilnadel 3 in ihrer Öffnungsstellung angeordnet ist. Durch die Druckabsenkung in der Steuerkammer 10B infolge des Öffnens der Servoventilnadel 3 wird die hierfür notwendige Kraft vorteilhaft verringert, was eine kompakte Gestaltung der Spule 2 erlaubt. Jedoch kann das Absperrventil 100 auch derart ausgelegt sein, dass auch ohne eine Druckdifferenz zwischen Steuerkammer 10B und Auslasskammer 10A ein Öffnen der Hauptventilnadel 4 möglich ist. Da die Servoventilnadel 3 in ihrer Schließstellung an dem Trennsteg 14 anliegt kann sich in dem optionalen Reststeg 16A, wenn dieser ausreichend dünn gestaltet ist, in diesem ein Zustand magnetischer Sättigung einstellen. Somit wird eine hohe magnetische Anziehungskraft in dem Spalt zwischen dem Flachanker 44 der Hauptventilnadel 4 und dem Trennsteg 14 erzeugt. Dies erleichtert allgemein ein Öffnen der Hauptventilnadel 4, nicht nur in Situationen, in denen keine Druckdifferenz zwischen Steuerkammer 10B und Auslasskammer 10A herrscht.

Aufgrund des kompakten Aufbaus des Absperrventils 100 kann dieses bei der in Fig. 4 schematisch gezeigten Gastankvorrichtung 200 optional in der Auslassöffnung 211 des Hochdruckgastanks 210 aufgenommen sein. Allgemein ist die Einlassöffnung 11 des Absperrventils 100 mit der Auslassöffnung 211 des Tanks 210 verbunden. Die Auslassöffnung 12 und die Steueröffnung 13 des Gehäuses 1 des Absperrventils 100 sind jeweils mit der Brennstoffzufuhrleitung 302 verbunden, z.B. über den Anschluss 61.

Obwohl die vorliegende Erfindung vorstehend anhand von Ausführungsbeispielen exemplarisch erläutert wurde, ist sie darauf nicht beschränkt, sondern auf vielfältige Weise modifizierbar. Insbesondere sind auch Kombinationen der voranstehenden Ausführungsbeispiele denkbar. Weiterhin ist die Erfindung nicht auf die Anwendung in einem Brennstoffzellensystem beschränkt. Beispielsweise kann die Gastankvorrichtung auch in Zusammenhang mit anderen Systemen, in denen Gas, insbesondere Wasserstoff als Brennstoff oder Reaktionsprodukt verwendet wird, eingesetzt werden. Rein beispielhaft sei ein Fahrzeug genannt, welches gasförmigen Brennstoff zum Betrieb eines Verbrennungsmotors nutzt.

## Patentansprüche

1. Absperrventil (100) für eine Gastankvorrichtung (200), aufweisend ein Gehäuse (1) mit einer Einlassöffnung (11) zur Verbindung mit einem Hochdrucktank (210), einer Auslassöffnung (12) zur Verbindung mit einer Versorgungsleitung (302) und einer Steueröffnung (13) zur Verbindung mit der Versorgungsleitungsleitung (302), wobei das Gehäuse (1) einen sich entlang einer Längsachse (L1) erstreckenden Innenraum (10) definiert und einen Trennsteg (14) aufweist, welcher den Innenraum (10) in Bezug auf die Längsachse (L1) in eine Auslasskammer (10A) und eine Steuerkammer (10B) unterteilt, wobei de r Trennsteg (14) eine Führungsbohrung (15) aufweist, welche sich zwischen der Auslasskammer (10A) und der Steuerkammer (10B) erstreckt,
**dadurch gekennzeichnet, dass** das Absperrventil (100) eine in dem Trennsteg (14) aufgenommene und die Führungsbohrung (15) umschließende elektrische Spule (2) aufweist, wobei das Absperrventil (100) eine in der Steuerkammer (10B) angeordnete Servoventilnadel (3) aufweist, welche entlang der Längsachse (L1) in eine Schließstellung vorgespannt ist, in der die Servoventilnadel (3) die Steueröffnung (13) abdichtet, und mittels eines durch die Spule (2) erzeugbaren Magnetfelds in eine Öffnungsstellung bewegbar ist, in der die Servoventilnadel (3) die Steueröffnung (13) freigibt und an dem Trennsteg (14) anliegt, wobei die Servoventilnadel (3) einen Verbindungskanal (33) aufweist, welcher die Steuerkammer (10B) in der Öffnungsstellung der Servoventilnadel (3) mit der Führungsbohrung (15) verbindet, und wobei das Absperrventil (100) eine in der Führungsbohrung (15) entlang der Längsachse (L1) bewegbar geführte Hauptventilnadel (4) aufweist, welche entlang der Längsachse (L1) in eine Schließstellung vorgespannt ist, in der die Hauptventilnadel (4) die Auslassöffnung (12) abdichtet, und, wenn die Servoventilnadel (3) in ihrer Öffnungsstellung angeordnet ist, mittels des durch die Spule (2) erzeugbaren Magnetfelds in eine Öffnungsstellung bewegbar ist, in der die Hauptventilnadel (4) die Auslassöffnung (12) freigibt.

2. Absperrventil (100) nach Anspruch 1, wobei der Trennsteg (14) eine die Führungsbohrung (15) umschließende Aufnahmeausnehmung (16) aufweist, welche sich von der Steuerkammer (10B) aus entlang der Längsachse (L1) als Sackloch erstreckt, und wobei die Spule (2) in der Aufnahmeausnehmung (16) angeordnet ist.

3. Absperrventil (100) nach Anspruch 1 oder 2, wobei die Hauptventilnadel (4) einen Schaft (40), welcher in einem ersten Endbereich (41) in der Führungsbohrung (15) geführt ist, und einen Dichtabschnitt (43) aufweist, welcher in einem zweiten Endbereich (42) des Schafts (40) ausgebildet ist und in der Schließstellung der Hauptventilnadel (4) an einem durch die Auslassöffnung (12) definierten Hauptventilsitz (12S) anliegt.

4. Absperrventil (100) nach Anspruch 3, wobei der Schaft (40) der Hauptventilnadel in dem ersten Endbereich (41) eine erste Querschnittsfläche (A41) aufweist, welche größer ist als eine zweite Querschnittsfläche (A12) des Hauptventilsitzes (12S).

5. Absperrventil (100) nach Anspruch 3 oder 4, wobei die Hauptventilnadel (4) einen von dem Schaft (40) vorstehenden Flachanker (44) aufweist, welcher in der Schließstellung der Hauptventilnadel (4) beabstandet zu dem Trennsteg (14) angeordnet ist und in der Öffnungsstellung der Hauptventilnadel (4) an dem Trennsteg (14) anliegt.

6. Absperrventil (100) nach einem der voranstehenden Ansprüche, wobei die Servoventilnadel (3) einen Schaft (30), einen an einem ersten Endbereich (31) des Schafts (30) ausgebildeten Dichtabschnitt (34), und einen mit einem zweiten Endbereich (32) des Schafts (30) verbundenen Flachanker (35), der von dem Schaft (30) vorsteht, aufweist, wobei in der Schließstellung der Servoventilnadel (3) der Dichtabschnitt (34) an einem durch die Steueröffnung (13) definierten Servoventilsitz (13S) anliegt und der Flachanker (35) beabstandet zu dem Trennsteg (14) angeordnet ist, und wobei in der Öffnungsstellung der Servoventilnadel (3) der Dichtabschnitt (34) beabstandet zu dem Servoventilsitz (13S) angeordnet ist und der Flachanker (35) an dem Trennsteg (14) anliegt.

7. Absperrventil (100) nach einem der voranstehenden Ansprüche, wobei die Servoventilnadel (3) und die Hauptventilnadel (4) durch eine gemeinsame Feder (5), die in der Führungsbohrung (15) angeordnet ist, in die jeweilige Schließstellung vorgespannt sind.

8. Absperrventil (100) nach einem der voranstehenden Ansprüche, zusätzlich aufweisend:
eine Steuerleitung (6), welche die Auslassöffnung (12) und die Steueröffnung (13) außerhalb des Innenraums (10) fluidisch leitend miteinander verbindet und einen Anschluss (61) zur Verbindung mit der Versorgungsleitung (302) aufweist.

9. Absperrventil (100) nach einem der Ansprüche 1 bis 7, wobei das Gehäuse (1) einen mit der Auslassöffnung (11) verbundenen ersten Anschluss zur Verbindung mit der Versorgungsleitung (302) und einen mit der Steueröffnung (13) verbundenen zweiten Anschluss zur Verbindung mit der Versorgungsleitung (302) aufweist.

10. Gastankvorrichtung (200), insbesondere für ein Brennstoffzellensystem (300), mit
einem Hochdruckgastank (210) zur Aufnahme von Gas und
einem Absperrventil (100) nach einem der voranstehenden Ansprüche, **dadurch gekennzeichnet, dass** die Einlassöffnung (11) des Gehäuses (1) des Absperrventils (100) mit einer Auslassöffnung (211) des Hochdruckgastanks (210) verbunden ist.

11. Gastankvorrichtung (200) nach Anspruch 10, wobei das Gehäuse (1) des Absperrventils (100) in der Auslassöffnung (211) des Hochdruckgastanks (210) aufgenommen ist.

12. Brennstoffzellensystem (300), mit
einer Brennstoffzellenanordnung (310) mit zumindest einer Brennstoffzelle und einem Brennstoffeinlass (311) zum Zuführen von gasförmigem Brennstoff und einem Oxidationsgaseinlass (313) zum Zuführen von Oxidationsgas und einem Produktauslass (314) zum Abführen von Reaktionsprodukten und einer mit dem Brennstoffeinlass (311) verbundene Brennstoffzufuhrleitung (302) und einer Gastankvorrichtung (200) nach Anspruch 10 oder 11, **dadurch gekennzeichnet, dass** die Auslassöffnung (12) und die Steueröffnung (13) des Gehäuses (1) des Absperrventils (100) jeweils mit der Brennstoffzufuhrleitung (302) verbunden sind.

## Claims

1. Shut-off valve (100) for a gas-tank device (200), having a housing (1) with an inlet opening (11) for connection to a high-pressure tank (210), having an outlet opening (12) for connection to a supply line (302), and having a control opening (13) for connection to the supply line (302), wherein the housing (1) defines an interior space (10) extending along a longitudinal axis (L1) and has a separating web (14) which subdivides the interior space (10), in relation to the longitudinal axis (L1), into an outlet chamber (10A) and a control chamber (10B), wherein the separating web (14) has a guide bore (15) which extends between the outlet chamber (10A) and the control chamber (10B), **characterized in that** the shut-off valve (100) has an electric coil (2) which is accommodated in the separating web (14) and which surrounds the guide bore (15), wherein the shut-off valve (100) has a servo-valve needle (3) which is arranged in the control chamber (10B) and which is preloaded into a closed position along the longitudinal axis (L1), in which closed position the servovalve needle (3) seals off the control opening (13), and which is movable into an open position by means of a magnetic field able to be generated by the coil (2), in which open position the servo-valve needle (3) opens up the control opening (13) and abuts against the separating web (14), wherein the servo-valve needle (3) has a connecting channel (33) which connects the control chamber (10B) to the guide bore (15) in the open position of the servo-valve needle (3), and wherein the shut-off valve (100) has a main-valve needle (4) which is guided movably along the longitudinal axis (L1) in the guide bore (15) and which is preloaded into a closed position along the longitudinal axis (L1), in which closed position the main-valve needle (4) seals off the outlet opening (12), and which, when the servo-valve needle (3) is arranged in its open position, is movable into an open position by means of the magnetic field able to be generated by the coil (2), in which open position the main-valve needle (4) opens up the outlet opening (12).

2. Shut-off valve (100) according to Claim 1, wherein the separating web (14) has an accommodating recess (16) which surrounds the guide bore (15) and which extends from the control chamber (10B) along the longitudinal axis (L1) as a blind hole, and wherein the coil (2) is arranged in the accommodating recess (16).

3. Shut-off valve (100) according to Claim 1 or 2, wherein the main-valve needle (4) has a shank (40), which is guided in the guide bore (15) in a first end region (41), and a sealing portion (43), which is formed in a second end region (42) of the shank (40) and, in the closed position of the main-valve needle (4), abuts against a main-valve seat (12S) defined by the outlet opening (12).

4. Shut-off valve (100) according to Claim 3, wherein the shank (40) of the main-valve needle has in the first end region (41) a first cross-sectional area (A41) that is larger than a second cross-sectional area (A12) of the main-valve seat (12S).

5. Shut-off valve (100) according to Claim 3 or 4, wherein the main-valve needle (4) has a flat armature (44) which projects from the shank (40) and which, in the closed position of the main-valve needle (4), is arranged spaced from the separating web (14) and which, in the open position of the main-valve needle (4), abuts against the separating web (14).

6. Shut-off valve (100) according to one of the preceding claims, wherein the servo-valve needle (3) has a shank (30), a sealing portion (34), which is formed on a first end region (31) of the shank (30), and a flat armature (35), which is connected to a second end region (32) of the shank (30) and which projects from the shank (30), wherein, in the closed position of the servovalve needle (3), the sealing portion (34) abuts against a servo-valve seat (13S) defined by the control opening (13) and the flat armature (35) is arranged spaced apart from the separating web (14), and wherein, in the open position of the servo-valve needle (3), the sealing portion (34) is arranged spaced apart from the servo-valve seat (13S) and the flat armature (35) abuts against the separating web (14).

7. Shut-off valve (100) according to one of the preceding claims, wherein the servo-valve needle (3) and the main-valve needle (4) are preloaded into the respective closed position by a common spring (5) which is arranged in the guide bore (15).

8. Shut-off valve (100) according to one of the preceding claims, additionally having:
a control line (6) which fluidically connects the outlet opening (12) and the control opening (13) to one another outside the interior space (10) and has a connection (61) for connection to the supply line (302).

9. Shut-off valve (100) according to one of Claims 1 to 7, wherein the housing (1) has a first connection, connected to the outlet opening (11), for connection to the supply line (302) and has a second connection, connected to the control opening (13), for connection to the supply line (302).

10. Gas-tank device (200), in particular for a fuel-cell system (300), having
a high-pressure gas tank (210) for holding gas, and
a shut-off valve (100) according to one of the preceding claims, **characterized in that** the inlet opening (11) of the housing (1) of the shut-off valve (100) is connected to an outlet opening (211) of the high-pressure gas tank (210).

11. Gas-tank device (200) according to Claim 10, wherein the housing (1) of the shut-off valve (100) is accommodated in the outlet opening (211) of the high-pressure gas tank (210).

12. Fuel-cell system (300) having
a fuel-cell arrangement (310), which has at least one fuel cell and one fuel inlet (311) for feeding of gaseous fuel and one oxidation-gas inlet (313) for feeding of oxidation gas and one product outlet (314) for discharge of reaction products, and a fuel-feeding line (302) connected to the fuel inlet (311), and a gas-tank device (200) according to Claim 10 or 11, **characterized in that** the outlet opening (12) and the control opening (13) of the housing (1) of the shut-off valve (100) are each connected to the fuel-feeding line (302).

## Revendications

1. Valve d'arrêt (100) pour un dispositif de réservoir de gaz (200), possédant un corps (1) ayant un orifice d'entrée (11) servant au raccordement à un réservoir à haute pression (210), un orifice de sortie (12) servant au raccordement à une conduite d'alimentation (302) et un orifice de commande (13) servant au raccordement à la conduite d'alimentation (302), le boîtier (1) définissant un espace intérieur (10) qui s'étend le long d'un axe longitudinal (L1) et comprenant une paroi de séparation (14), laquelle divise l'espace intérieur (10) par rapport à l'axe longitudinal (L1) en une chambre de sortie (10A) et une chambre de commande (10B), la paroi de séparation (14) possédant un alésage de guidage (15), lequel s'étend entre la chambre de sortie (10A) et la chambre de commande (10B),
**caractérisée en ce que** la valve d'arrêt (100) possède une bobine électrique (2) logée dans la paroi de séparation (14) et entourant l'alésage de guidage (15), la valve d'arrêt (100) possédant un pointeau de servovalve (3) disposé dans la chambre de commande (10B), lequel est précontraint le long de l'axe longitudinal (L1) dans une position de fermeture, dans laquelle le pointeau de servovalve (3) ferme hermétiquement l'ouverture de commande (13), et peut être déplacé au moyen d'un champ magnétique pouvant être généré par la bobine (2) dans une position d'ouverture, dans laquelle le pointeau de servovalve (3) libère l'ouverture de commande (13) et s'appuie contre la paroi de séparation (14), le pointeau de servovalve (3) possédant un canal de liaison (33), lequel relie la chambre de commande (10B) à l'alésage de guidage (15) dans la position d'ouverture du pointeau de servovalve (3), et la valve d'arrêt (100) possédant un pointeau de valve principale (4) guidé en mobilité le long de l'axe longitudinal (L1) dans l'alésage de guidage (15), lequel est précontraint le long de l'axe longitudinal (L1) dans une position de fermeture, dans laquelle le pointeau de valve principale (4) ferme hermétiquement l'ouverture de sortie (12) et, lorsque le pointeau de servovalve (3) est disposé dans sa position d'ouverture, peut être déplacé au moyen du champ magnétique pouvant être généré par la bobine (2) dans une position d'ouverture dans laquelle le pointeau de valve principale (4) libère l'ouverture de sortie (12).

2. Valve d'arrêt (100) selon la revendication 1, la paroi de séparation (14) possédant un évidement d'accueil (16) qui entoure l'alésage de guidage (15), lequel s'étend depuis la chambre de commande (10B) le long de l'axe longitudinal (L1) sous la forme d'un trou borgne, et la bobine (2) étant disposée dans l'évidement d'accueil (16).

3. Valve d'arrêt (100) selon la revendication 1 ou 2, le pointeau de valve principale (4) possédant une tige (40), laquelle est guidée dans une première zone d'extrémité (41) dans l'alésage de guidage (15), et une portion d'étanchéité (43), laquelle est formée dans une deuxième zone d'extrémité (42) de la tige (40) et qui, dans la position fermée du pointeau de valve principale (4), s'applique contre un siège de valve principale (12S) défini par l'ouverture de sortie (12).

4. Valve d'arrêt (100) selon la revendication 3, la tige (40) du pointeau de valve principale possédant, dans la première zone d'extrémité (41), une première surface de section transversale (A41), laquelle est supérieure à une deuxième surface de section transversale (A12) du siège de valve principale (12S).

5. Valve d'arrêt (100) selon la revendication 3 ou 4, le pointeau de valve principale (4) possédant une armature plate (44) qui fait saillie de la tige (40), laquelle est disposée à distance de la paroi de séparation (14) dans la position de fermeture du pointeau de valve principale (4) et repose contre la paroi de séparation (14) dans la position d'ouverture du pointeau de valve principale (4).

6. Valve d'arrêt (100) selon l'une des revendications précédentes, le pointeau de servovalve (3) possédant une tige (30), une portion d'étanchéité (34) formée au niveau d'une première zone d'extrémité (31) de la tige (30), et une armature plate (35) reliée à une deuxième zone d'extrémité (32) de la tige (30), qui fait saillie de la tige (30), la portion d'étanchéité (34), dans la position de fermeture du pointeau de servovalve (3), reposant contre un siège de servovalve (13S) défini par l'ouverture de commande (13) et l'armature plate (35) étant disposée à distance de la paroi de séparation (14), et la portion d'étanchéité (34) dans la position d'ouverture du pointeau de servovalve (3), étant disposée à distance du siège de servovalve (13S) et l'armature plate (35) reposant contre la paroi de séparation (14).

7. Valve d'arrêt (100) selon l'une des revendications précédentes, le pointeau de servovalve (3) et le pointeau de valve principale (4) étant précontraints dans leur position de fermeture respective par un ressort (5) commun qui est disposé dans l'alésage de guidage (15).

8. Valve d'arrêt (100) selon l'une des revendications précédentes, présentant en outre :
une conduite de commande (6), laquelle relie entre elles en conduction fluidique l'ouverture de sortie (12) et l'ouverture de commande (13) à l'extérieur de l'espace intérieur (10) et possède un raccord (61) servant au raccordement à la conduite d'alimentation (302).

9. Valve d'arrêt (100) selon l'une des revendications 1 à 7, le boîtier (1) présentant un premier raccord relié à l'orifice de sortie (11) servant au raccordement à la conduite d'alimentation (302) et un deuxième raccord relié à l'orifice de commande (13) servant au raccordement à la conduite d'alimentation (302).

10. Dispositif de réservoir de gaz (200), en particulier pour un système de piles à combustible (300), comprenant
un réservoir de gaz à haute pression (210) destiné à accueillir du gaz et
une valve d'arrêt (100) selon l'une des revendications précédentes, **caractérisé en ce que** l'orifice d'entrée (11) du boîtier (1) de la valve d'arrêt (100) est relié à un orifice de sortie (211) du réservoir de gaz à haute pression (210).

11. Dispositif de réservoir de gaz (200) selon la revendication 10, le boîtier (1) de la valve d'arrêt (100) étant logé dans l'ouverture de sortie (211) du réservoir de gaz à haute pression (210).

12. Système de piles à combustible (300), comprenant
un arrangement de piles à combustible (310) comprenant au moins une pile à combustible et une entrée de combustible (311) destinée à l'amenée de combustible gazeux et une entrée de gaz oxydant (313) destinée à l'amenée de gaz oxydant et une sortie de produit (314) destinée à l'évacuation des produits de réaction et une conduite d'alimentation en combustible (302) reliée à l'entrée de combustible (311) et un dispositif de réservoir de gaz (200) selon la revendication 10 ou 11, **caractérisé en ce que** l'orifice de sortie (12) et l'orifice de commande (13) du boîtier (1) de la valve d'arrêt (100) sont respectivement reliés à la conduite d'alimentation en combustible (302).
